# EUROPEAN PATENT APPLICATION

(11) **EP 3 422 360 A1**
(43) Date of publication of application: **02.01.2019**
(21) Application number: 18171353.8
(22) Date of filing: 17.03.2014
(51) Int. Cl.: G21C 5/10, G21C 11/06, G21C 15/02, G21C 13/02, G21C 1/32

(54) **NUCLEAR REACTOR MODULE**

(30) Priority: 15.03.2013 US 201361787764 P
(62) Divisional of application: 14814608.7
(71) Applicant: NuScale Power, LLC, Corvallis, OR 97330 (US)
(72) Inventor: CADELL, Seth, Corvallis, OR Oregon 97330 (US); LISZKAI, Tamas, Corvallis, OR Oregon 97330 (US)
(74) Representative: Graham, Emma Louise

(57) **Abstract**

Nuclear modules and nuclear reactor systems including nuclear modules. The nuclear reactor module comprises a reactor vessel, a core that comprises one or more nuclear fuel assemblies, and a neutron reflector that surrounds the core and comprises alumina.

## Description

### TECHNICAL FIELD

This disclosure generally relates to nuclear reactors and, more particular neutron reflectors and support structure for nuclear reactor cores.

### BACKGROUND

Pressurized water reactors include nuclear fuel assemblies that, in some cases, are supported in a reactor pressure vessel of a nuclear reactor module by a baffle plate with reinforcement ribs, typically called former plates. The baffle plate typically surrounds the fuel assemblies and provides lateral support for the fuel assemblies. This structure is typically referred to as a core barrel or baffle-former-barrel assembly or the core shroud. The baffle plate may be assembled in either bolted assemblies or welded assemblies. Vertical restraint of the fuel assemblies is accomplished with the upper and lower core plates. In some instances, the baffle plate provides a secondary function of reflecting fast neutrons back into the fuel assemblies.

### SUMMARY

In a general implementation, a nuclear reactor system includes a reactor vessel that includes an interior volume; a core that includes one or more nuclear fuel assemblies; a riser that extends from a top portion of the core through the interior volume of the reactor vessel towards an upper half of the reactor vessel; a neutron reflector that includes an inner face that surrounds lateral sides of the core and an outer face opposite the inner face; a core support structure that includes one or more support posts that extend from near a bottom portion of the reactor vessel towards the core to support the one or more nuclear fuel assemblies; and a primary coolant flow path contained within the reactor vessel that extends from the riser toward the upper half of the reactor vessel, from the upper half of the reactor vessel in a downflow toward the bottom portion of the reactor vessel through an annulus between the outer face of the neutron reflector and the reactor vessel, and from the bottom portion of the reactor vessel around the one or more support posts through the core and to the riser.

In a first aspect combinable with the general implementation, the core support structure further includes a core barrel that is positioned in the annulus between the reflector and the reactor vessel.

In a second aspect combinable with any of the previous aspects, the primary coolant flow path extends in the downflow toward the bottom portion of the reactor vessel through the annulus between the outer face of the neutron reflector and an inner surface of the core barrel.

In a third aspect combinable with any of the previous aspects, the core support structure further includes a lower support plate positioned in the bottom portion of the reactor vessel and extending toward an interior surface of the reactor vessel.

In a fourth aspect combinable with any of the previous aspects, the one or more support posts extend from the lower support plate towards the core.

In a fifth aspect combinable with any of the previous aspects, the one or more support plates are in contacting engagement with a bottom surface of the reflector,

In a sixth aspect combinable with any of the previous aspects, the primary coolant flow path extends from the annulus to the bottom portion of the reactor vessel between the lower support plate and the bottom surface of the reflector.

A seventh aspect combinable with any of the previous aspects further includes a lower core plate supported on the one or more support posts between the posts and the one or more fuel assemblies.

In an eighth aspect combinable with any of the previous aspects, the one or more support posts extend from a radiussed inner surface of the reactor vessel through the bottom portion of the reactor vessel and towards the core.

In a ninth aspect combinable with any of the previous aspects, the primary coolant flow path extends from the annulus to the bottom portion of the reactor vessel and around the one or more support posts.

A tenth aspect combinable with any of the previous aspects further includes a lower core plate supported on the one or more support posts between the posts and the one or more fuel assemblies.

In an eleventh aspect combinable with any of the previous aspects, the primary coolant flow path extends from around the posts through one or more apertures in the lower core plate to the core.

In a twelfth aspect combinable with any of the previous aspects, a portion of the system includes one of alumina or beryllia.

In a thirteenth aspect combinable with any of the previous aspects, the reflector includes one of alumina or beryllia.

In a fourteenth aspect combinable with any of the previous aspects, the reflector includes a thickness of between about 0.5 inches and 5 inches.

In another general implementation, a method includes providing a nuclear reactor system that includes a reactor vessel that includes an interior volume, a core that includes one or more nuclear fuel assemblies, a riser that extends from a top portion of the core through an interior volume of the reactor vessel towards an upper half of the reactor vessel, and a core support structure; circulating a flow of primary coolant from the riser upward toward an upper half of the reactor vessel; circulating the flow of primary coolant from the upper half of the reactor vessel downward to a bottom portion of the reactor vessel through an annulus between an outer face of a neutron reflector that surrounds the core and the reactor vessel; circulating the flow of primary coolant from the bottom portion of the reactor vessel around one or more support posts of the core support structure that support the fuel assemblies and through the core; and circulating the flow of primary coolant from the core to the riser in a region between the fuel assemblies and an inner surface of the reflector opposite the outer face.

In a first aspect combinable with the general implementation, the core support structure further includes a core barrel.

In a second aspect combinable with any of the previous aspects, circulating the flow of primary coolant from the upper half of the reactor vessel downward to a bottom portion of the reactor vessel through an annulus between an outer face of a neutron reflector that surrounds the core and the reactor vessel includes circulating the flow of primary coolant from the upper half of the reactor vessel downward to a bottom portion of the reactor vessel through an annulus between an outer face of a neutron reflector that surrounds the core and the core barrel positioned in the annulus between the reflector and the reactor vessel.

In a third aspect combinable with any of the previous aspects, the core support structure further includes a lower support plate positioned in the bottom portion of the reactor vessel and extending toward an interior surface of the reactor vessel and the one or more support posts extend from the lower support plate into contacting engagement with a bottom surface of the reflector.

In a fourth aspect combinable with any of the previous aspects, circulating the flow of primary coolant from the bottom portion of the reactor vessel around one or more support posts of the core support structure that support the fuel assemblies and through the core includes circulating the flow of primary coolant from the annulus to the bottom portion of the reactor vessel between the lower support plate and the bottom surface of the reflector.

A fifth aspect combinable with any of the previous aspects further includes circulating the flow of primary coolant from between the lower support plate and the bottom surface of the reflector through a lower core plate supported on the one or more support posts between the posts and the one or more fuel assemblies and to the core.

In a sixth aspect combinable with any of the previous aspects, the one or more support posts extend from a radiussed inner surface of the reactor vessel through the bottom portion of the reactor vessel and towards the core.

In a seventh aspect combinable with any of the previous aspects, circulating the flow of primary coolant from the bottom portion of the reactor vessel around one or more support posts of the core support structure that support the fuel assemblies and through the core includes circulating the flow of primary coolant through a lower core plate supported on the one or more support posts between the posts and the one or more fuel assemblies and to the core.

In an eighth aspect combinable with any of the previous aspects, the reflector includes one of alumina or beryllia.

In a ninth aspect combinable with any of the previous aspects, the reflector includes a thickness of between about 0.5 inches and 5 inches.

In another general implementation, a method of cooling a neutron reflector in a nuclear reactor system includes flowing a primary coolant from a riser and into an annulus between the riser and a reactor vessel; flowing the primary coolant downward through the annulus that extends between a reflector that surrounds a core of the nuclear reactor system and the reactor vessel; and transferring heat from the reflector to the downward flow of primary coolant.

In another general implementation, a nuclear reactor module includes a reactor vessel; a core that includes one or more nuclear fuel assemblies; and a neutron reflector that surrounds the core and includes alumina.

Various implementations of a nuclear core support and reflector assembly described in this disclosure may include none, one, some, or all of the following features. For example, multiple fuel assemblies may be supported both laterally (e.g., radially within a nuclear reactor core) as well as axially to, for example, resist movement during operation and/or a seismic event. As another example, a reflector that reflects fast neutrons back into the core may be composed of alumina, thereby providing a workable and more cost efficient assembly, for example, as compared to a graphite or stainless steel reflector as is typical for commercial power nuclear reactors. As another example, the assembly may include a thick reflector (e.g., between about 4"-6" or even greater thicknesses up to 20") of alumina for increased neutron efficiency over thin reflectors (e.g., between ¼" and 1¼") of stainless steel. As another example, the assembly may facilitate a downflow arrangement (e.g., from a top end of a reactor vessel to a bottom end near the core) of primary coolant to cool the reflector, rather than an upflow arrangement with a bypass. In some aspects, such an arrangement may provide for less flow resistance to the primary coolant circulation by, for example, eliminating the bypass, while still cooling the reflector to a proper temperature. As yet another example, the assembly may be configured to minimize flow resistance through the reactor vessel of the primary coolant as it circulates therethrough. As yet another example, a downflow arrangement could decrease fabrication costs, e.g., of the reflector, due to not having to fabricate upflow channels.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram illustrating a nuclear reactor system;
FIGS. 2A-2B are schematic diagrams showing side and top views, respectively, of a circulation path in a portion of a nuclear reactor system;
FIGS. 3A-3C illustrate side, top, and isometric views, respectively, of an example implementation of a portion of a nuclear reactor system that includes a reflector and core support structure; and
FIGS. 4A-4C illustrate side, top, and isometric views, respectively, of another example implementation of a portion of a nuclear reactor system that includes a reflector and core support structure.

### DETAILED DESCRIPTION

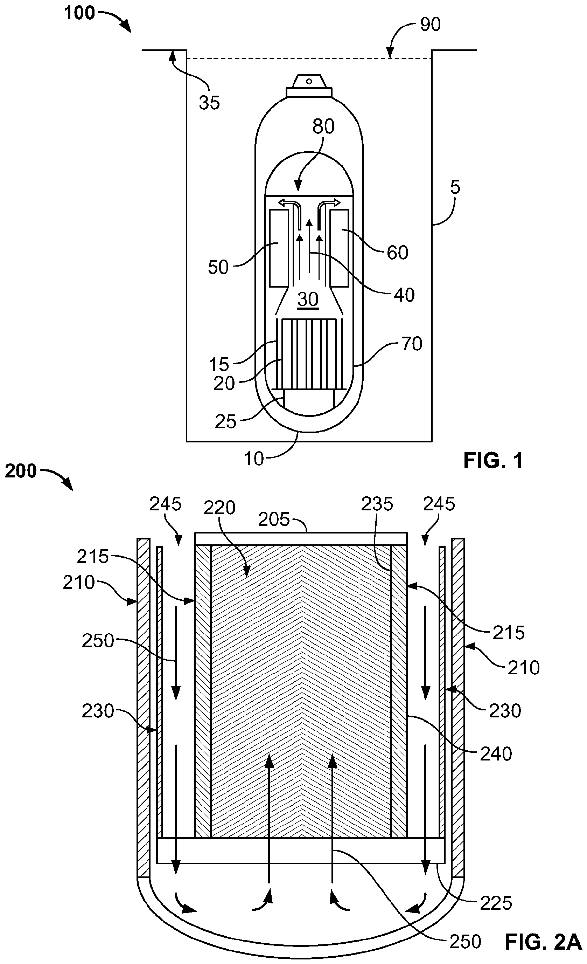

FIG. 1 is a block diagram illustrating a nuclear reactor system 100 (e.g., a nuclear reactor) that includes a core support structure 25 and a neutron reflector 15. In some aspects, the nuclear reactor system 100 is a commercial power pressurized water reactor that utilizes natural circulation of a primary coolant to cool a nuclear core and transfer heat from the core to a secondary coolant through one or more heat exchangers. The secondary coolant (e.g., water), once heated (e.g., to steam, superheated steam or otherwise), can drive power generation equipment, such as steam turbines or otherwise, before being condensed and returned to the one or more heat exchangers.

With respect to the nuclear reactor system 100, a reactor core 20 is positioned at a bottom portion of a cylinder-shaped or capsule-shaped reactor vessel 70. Reactor core 20 includes a quantity of nuclear fuel assemblies, or rods (e.g., fissile material that produces, in combination with control rods, a controlled nuclear reaction), and optionally one or more control rods (not shown). As noted above, in some implementations, nuclear reactors system 100 is designed with passive operating systems (e.g., without a circulation pump for the primary coolant) employing the laws of physics to ensure that safe operation of the nuclear reactor 100 is maintained during normal operation or even in an emergency condition without operator intervention or supervision, at least for some predefined period of time. A cylinder-shaped or capsule-shaped containment vessel 10 surrounds reactor vessel 70 and is partially or completely submerged in a reactor pool, such as below waterline 90 (which may be at or just below a top surface 35 of the bay 5), within reactor bay 5. The volume between reactor vessel 70 and containment vessel 10 may be partially or completely evacuated to reduce heat transfer from reactor vessel 70 to the reactor pool. However, in other implementations, the volume between reactor vessel 70 and containment vessel 10 may be at least partially filled with a gas and/or a liquid that increases heat transfer between the reactor and containment vessels.

In the illustrated implementation, reactor core 20 is submerged within a liquid, such as water, which may include boron or other additives, which rises into channel 30 after making contact with a surface of the reactor core. The upward motion of heated coolant is represented by arrows 40 (e.g., primary coolant 40) within channel 30 (e.g., riser 30). The coolant travels over the top of heat exchangers 50 and 60 and is drawn downward by density difference along the inner walls of reactor vessel 70 thus allowing the coolant to impart heat to heat exchangers 50 and 60. After reaching a bottom portion of the reactor vessel 70, contact with reactor core 20 results in heating the coolant, which again rises through channel 30. Although heat exchangers 50 and 60 are shown as two distinct elements in FIG. 1, heat exchangers 50 and 60 may represent any number of helical (or other shape) coils that wrap around at least a portion of channel 30.

Normal operation of the nuclear reactor module proceeds in a manner wherein heated coolant rises through channel 30 and makes contact with heat exchangers 50 and 60. After contacting heat exchangers 50 and 60, the coolant sinks towards the bottom of reactor vessel 70 in a manner that induces a thermal siphoning process. In the example of FIG. 1, coolant within reactor vessel 70 remains at a pressure above atmospheric pressure, thus allowing the coolant to maintain a high temperature without vaporizing (e.g., boiling).

As coolant within heat exchangers 50 and 60 increases in temperature, the coolant may begin to boil. As the coolant within heat exchangers 50 and 60 begins to boil, vaporized coolant, such as steam, may be used to drive one or more turbines that convert the thermal potential energy of steam into electrical energy. After condensing, coolant is returned to locations near the base of heat exchangers 50 and 60.

The illustrated core support structure 25 provides axial support (e.g., at a top and/or bottom end) to the fuel assemblies in the core 20. At a high level, the core support structure 25 vertically restrains the fuel assemblies in the core 20 through upper and lower plates that are mounted adjacent top and bottom ends, respectively of the core assemblies. Lateral restraint of the fuel assemblies may be accomplished with a solid or semi-solid wall of the support structure 25 that surrounds the core 20. The support structure 25, generally, restrains the fuel assemblies in the core 20 during both normal operation as well as during an emergency event, such as a seismic event.

In the illustrated implementation, and as discussed more fully below, a downcomer region between the reflector 15 and the reactor vessel 70 provides a fluid path for the primary coolant 40 flowing in an annulus between the riser 30 and the reactor vessel 70 from a top end of the vessel 70 (e.g., after passing over the heat exchangers 50, 60) and a bottom end of the vessel 70 (e.g., below the core 20). The fluid path channels primary coolant 40 that has yet to be recirculated through the core 20 into convective contact with at least one surface of the reflector 15 in order to cool the reflector 15.

Together, the reflector 15 and core support structure 25 may provide the following functionality. For example, one or both of these components may provide structural support and orientation of the fuel assemblies, control rod assemblies, and in-core instrumentation. Further, one or both of these components may be designed for at least a 60 year life in the illustrated environment that includes the primary coolant 40 and radiation from nuclear fission in the core 20. Further, one or both components may be configured to form a closed natural circulation circuit while minimizing flow resistance in the nuclear reactor system 100 operating with a passive circulation system (e.g., no pumps for the primary coolant 40). One or both components may also provide for neutron reflection capability (e.g., back into the core 20) as well as neutron and gamma shielding for the reactor vessel 70 and the containment vessel 10.

Reflector material may impact neutron reflection back into the core 20, and thus neutron efficiency (e.g., k_{eff}, which is a measure of criticality of an operating reactor, with 1 being stable, >1 indicating increasing power, and <1 indicating decreasing power). For example, in a pressurized water reactor, on average of 2.9%-9% of the neutrons born from fission can leak out of the core). Neutron leakage can directly affect the needed fuel enrichment and the fuel's effective burn life, which can affect operating costs. In some aspects, the reflector 15 has a low absorption cross-section and a high scattering cross-section, thereby increasing reflection of fast neutrons back into the core 20 with minimal energy change to allow the neutron to thermalize in the fueled region of the core 20.

In some aspects of the illustrated implementation, the reflector 15 may be made from alumina. Alumina (Al₂O₃) is a naturally occurring mineral and product of aluminum oxidation. Alumina melts in air at 2050°C and has good resistance to thermal shock; other properties include a density of 3.95 g/cc, a coefficient of thermal expansion (CTE) of 8.50x10⁻⁶ at a temperature of 500°C. Alumina crystal also is easy to use and is insoluble in water and not toxic. In the illustrated implementation, a core with the reflector 15 made of alumina has a k_{eff} of 1.0 (e.g., with a specified amount of boron concentration) at a thickness of about 0.5" increasing to a k_{eff} of about 1.022 at a thickness of about 5" (e.g., with the specified amount of boron). Since a k_{eff} of 1.0 is desired for stable operation of the nuclear reactor 100, enrichment of the nuclear fuel could be decreased at a reflector thickness greater than 0.5" (e.g., at 4.5"), thereby increasing efficiency.

In some aspects of the illustrated implementation, the reflector 15 may be made from beryllia. Beryllia (BeO) is a ceramic material. Beryllia has a density of 3.01 g/cc and a CTE of 8.00x10⁻⁶ at a temperature of 500°C. In the illustrated implementation, the reflector 15 made of beryllia has a k_{eff} of 1.0 at a thickness of about 0.5" increasing to a k_{eff} of about 1.026 at a thickness of about 4.5". Since a k_{eff} of 1.0 is desired for stable operation of the nuclear reactor 100, enrichment of the nuclear fuel could be decreased at a reflector thickness greater than 0.5", thereby increasing efficiency.

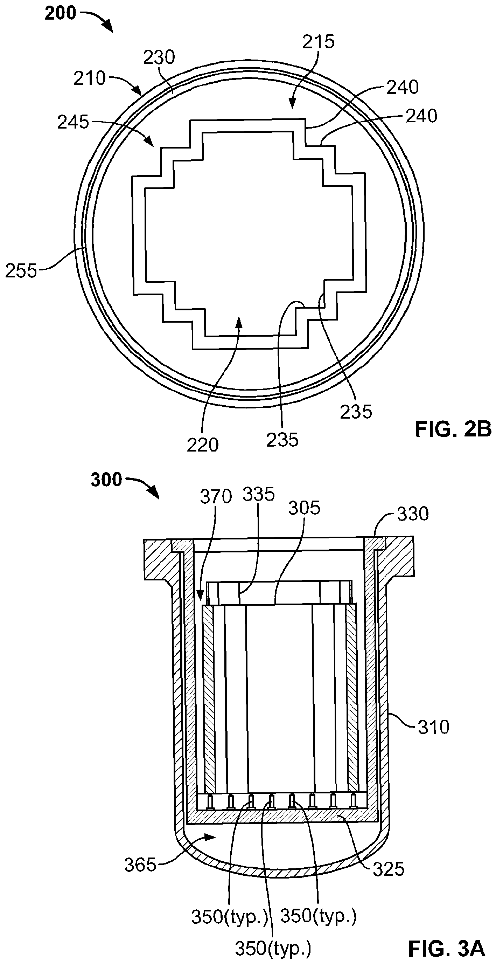

FIGS. 2A-2B are schematic diagrams showing side and top views, respectively, of a circulation path in a portion of a nuclear reactor system 200. In some aspects, the system 200 may be a portion of the illustrated system 100 of FIG. 1, or another nuclear reactor system (e.g., another passive circulation nuclear reactor system). At a high level, the system 200 includes a downflow arrangement in which a primary coolant 250 is circulated (e.g., naturally) from a top end of a reactor vessel 210 toward a bottom end of the vessel 210 in order to cool a reflector 215 that is positioned adjacent (e.g., around) a core 220 that includes nuclear fuel assemblies.

As illustrated in this example, a core support structure includes an upper support plate 205 positioned above (e.g., at a top end) the core 220 (e.g., between the core 220 and a riser, not shown). The support structure also includes a lower support plate 225 positioned below (e.g., at a bottom end) of the core 220 and sized to extend around a perimeter of an inside surface of the reactor vessel 210. The support structure also includes a core barrel 230 positioned adjacent the inside surface of the reactor vessel 210, with a relatively small annulus 255 therebetween. Together, the upper and lower support plates 205 and 225 and the core barrel 230 may provide axial and lateral support to the core 220, such as during normal operation as well as during an emergency operation, such as a seismic event.

One or both of the plates 205 and 225 may include holes or apertures to allow fluid communication therethrough (e.g., of the primary coolant 250). For example, as illustrated, primary coolant 250 may be circulated (e.g., naturally) downward in an annulus 245 between the reflector 215 and the core barrel 230. The coolant 250, in part due to a radiussed bottom portion of the reactor vessel 210, turns toward a center of the vessel 210 and upward through the core 220. As the primary coolant 250 circulates through the core 220, heat is transferred (e.g., from energy released from fission) to the coolant 250. Such heat is eventually transferred to a secondary coolant that is circulated in heat exchangers, e.g., mounted adjacent a riser of the nuclear reactor vessel 200 (not shown) as explained above.

The reflector 215 (which could be made of alumina, beryllia, or another material), as illustrated in FIGS. 2A-2B, may surround the core 220 and reflect neutrons that leak from the core 220 back into the core 220. As a result, the reflector 215 may reach high temperatures and require cooling. An inner face 235 of the reflector 215 is at least partially cooled by the flow of primary coolant 250 through the core 220. An outer face 240 of the reflector 215, as illustrated, by the downflow of the primary coolant 250 in the annulus 245 between the reflector 215 and the core barrel 230. As illustrated, all or a substantial portion of the primary coolant flow 250 is circulated through the core 220 without bypassing the core 220 to flow through the reflector 215. Thus, all or substantially all of the cooling of the reflector 215 may come from the downflow of coolant 250 in the annulus 245 (on the outer face 240) and the upflow of the primary coolant 250 (on the inner face 235) through the core 220.

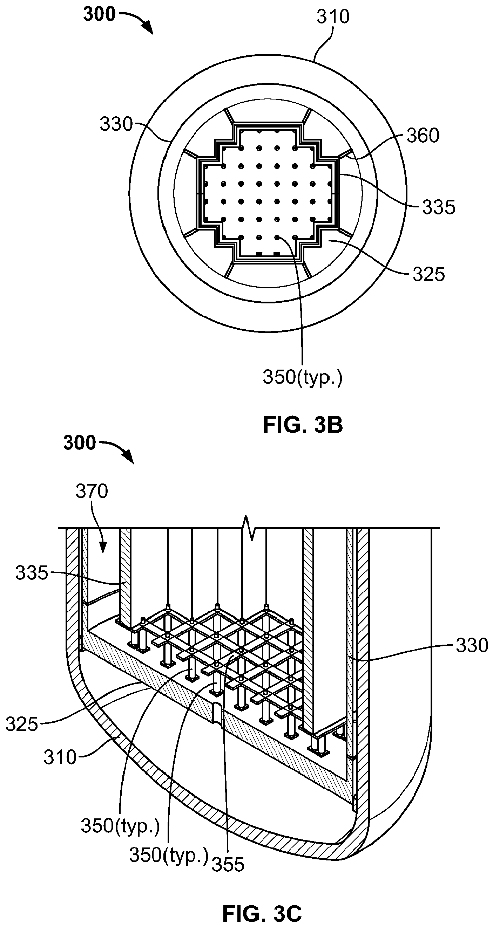

FIGS. 3A-3C illustrate side, top, and isometric views, respectively, of an example implementation of a portion of a nuclear reactor system 300 that includes a reflector 335 and a core support structure. Generally, the example implementation of the nuclear reactor system 300 facilitates a downflow arrangement of a primary coolant through an annulus 370 between a core barrel 330 and the reflector 335 that is similar to or the same as the downflow arrangement shown in FIGS. 2A-2B. Moreover, as illustrated, a core support structure includes an upper plate 305 mounted above a core 320 (e.g., that includes fuel assemblies during operation), a lower plate 325 mounted below the core 320, and multiple posts 350.

As illustrated, the posts 350 extend from the lower plate 325 and support fuel assemblies (e.g., one fuel assembly per post 350) and lift the fuel assemblies away from and above the lower plate 325. In the illustrated implementation, the reflector 335 also sits on posts 350 and is supported by the posts 350, thereby separating the reflector 335 apart from the lower plate 325.

In the illustrated implementation, the reflector 335 includes fins 360 that extend radially outward from a center of the reactor vessel 310 and engage the core barrel 330. The fins 360, in some aspects, may provide or help provide lateral support for the fuel assemblies positioned in the core 320.

Turning to FIG. 3C particularly, another example aspect of the nuclear reactor system 300 is shown. In this aspect, the posts 350 are coupled to a lower core plate 355 that forms a support area for fuel assemblies. Thus, in this aspect, fuel assemblies may not be supported directly on the posts 350 but instead may be directly supported by the lower core plate 355.

In operation of the nuclear reactor system 300, primary coolant may be circulated (e.g., naturally) downward from an upper part of the system 300 (not shown), for example, after circulating through a riser and past heat exchangers, in the annulus 370 between the core barrel 330 and the reflector 335. As the primary coolant passes the reflector 335 in the downcomer annulus 370, heat is transferred to the coolant from the reflector 335 (e.g., from an outer face of the reflector 335). The primary coolant circulates under the reflector 335 (e.g., that is raised on posts 350), around the posts 350, and up through the core 320. As the coolant circulates through the core 320, heat is transferred from fuel assemblies and an inner face of the reflector 335 to the coolant as it circulated upward toward an upper end of the system 300.

In some aspects, an annulus between the core barrel 330 and the reactor vessel 310 is filled with primary coolant, but at a minimal flow rate through this region. For example, orifices in the core barrel 330 may be installed to allow trapped air to exit this annulus as the system fills with primary coolant, and a small amount of coolant may pass through this annulus during operations. This coolant flow, in some aspects, may ensure the coolant in this region does not boil.

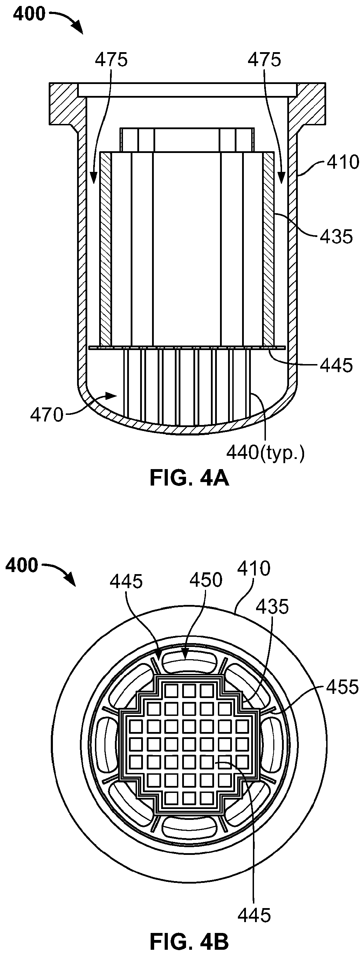

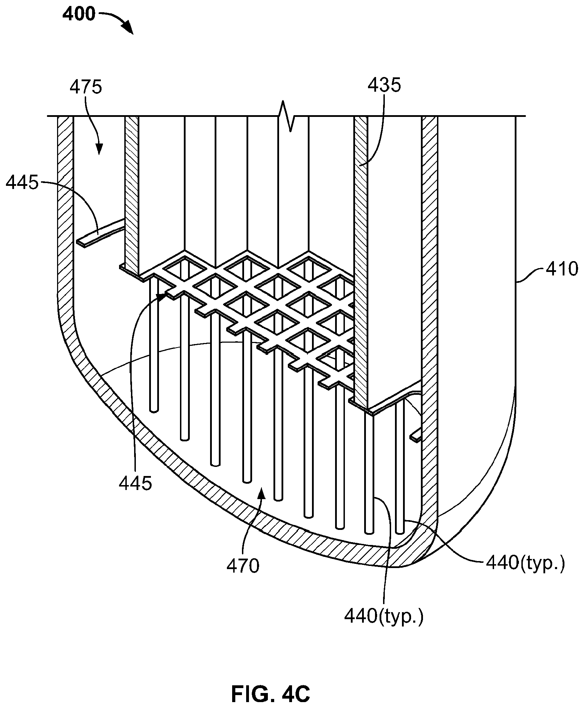

FIGS. 4A-4C illustrate side, top, and isometric views, respectively, of another example implementation of a portion of a nuclear reactor system 400 that includes a reflector 435 and core support structure that includes posts 440 and a lower core plate 445 but does not include a core barrel. In some aspects, the nuclear reactor system 400, like the system 300, includes a downflow arrangement in which a primary coolant flow is circulated downward from a top portion of the system 400 (e.g., through an annulus between a riser (not shown) and a reactor vessel 410), through an annulus 475, and then upward through a core 420. The downflow circulation, in some aspects, may cool an outer surface of the reflector 435 while the upflow circulation (e.g., through the core 420) may cool an inner surface of the reflector 435.

Due to, for instance, removal of the core barrel from the system 400, a weight of the core (e.g., fuel assemblies in the core) be transferred to the reactor vessel 410 via the posts 440, the lower core plate 445, and the reflector 435. For example, the posts 440 may transfer a portion of the load from the lower core plate 445 to a radiussed bottom portion of the reactor vessel 410. This interface may provide both the upward and downward loads for the fuel assemblies in the core 420. For example, the downward load may simply be carried through the posts 440 while the upward load may be carried through a locking mechanism that transfers the fuel's upward acceleration forces, occurring during seismic events, from the upper core support plate through the reflector 435.

Turning back to FIGS. 4A-4C, lateral support of the fuel assemblies in the core 420 can be carried from the lower core plate 445 to the reflector 435 and to support fins 455 that are coupled (e.g., attached) to the reactor vessel 410. In some aspects, such a support system can provide for a large volume below the core 420. In some aspects, the volume can be reduced by lowering the core 420, which will, in turn, increase pumping power required to circulate the primary coolant through the core 420 (e.g., in a forced circulation system) but decrease the power required to circulate the primary coolant in a natural circulation system.

As illustrated, the lower core plate 445 may include multiple apertures 450 therethrough, such as, for example, substantially square shaped apertures toward a center of the lower core plate 445 and substantially oval shaped apertures toward a perimeter of the lower core plate 445 (although other shapes are possible and contemplated by the present disclosure). In some aspects, the apertures 450 may provide for fluid communication between a volume of a lower portion of the reactor vessel 410 beneath the core 420 and the core 420. In some aspects, the lower core plate 445 may not include any apertures and fluid can be circulated

In operation of the nuclear reactor system 400, primary coolant may be circulated (e.g., naturally) downward from an upper part of the system 400 (not shown), for example, after circulating through a riser and past heat exchangers, in the annulus 475 between the reactor vessel 410 and the reflector 435. As the primary coolant passes the reflector 435 in the downcomer annulus 475, heat is transferred to the coolant from the reflector 435 (e.g., from an outer face of the reflector 435). The primary coolant circulates into a lower volume 470 of the reactor vessel 410, around the posts 440, and up through the lower core plate 445 and into the core 420. As the coolant circulates through the core 420, heat is transferred from fuel assemblies and an inner face of the reflector 435 to the coolant as it circulated upward toward an upper end of the system 400.

A number of implementations have been described. Nevertheless, it will be understood that various modifications may be made. For example, advantageous results may be achieved if the steps of the disclosed techniques were performed in a different sequence, if components in the disclosed systems were combined in a different manner, or if the components were replaced or supplemented by other components. Accordingly, other implementations are within the scope of the following claims.

The following numbered clauses contain statements of broad combinations of the inventive technical features herein disclosed:-
1. A nuclear reactor system, comprising:
   a reactor vessel that comprises an interior volume;
   a core that comprises one or more nuclear fuel assemblies;
   a riser that extends from a top portion of the core through the interior volume of the reactor vessel towards an upper half of the reactor vessel;
   a neutron reflector that comprises an inner face that surrounds lateral sides of the core and an outer face opposite the inner face;
   a core support structure that comprises one or more support posts that extend from near a bottom portion of the reactor vessel towards the core to support the one or more nuclear fuel assemblies; and
   a primary coolant flow path contained within the reactor vessel that extends from the riser toward the upper half of the reactor vessel, from the upper half of the reactor vessel in a downflow toward the bottom portion of the reactor vessel through an annulus between the outer face of the neutron reflector and the reactor vessel, and from the bottom portion of the reactor vessel around the one or more support posts through the core and to the riser.
2. The nuclear reactor system of clause 1, wherein the core support structure further comprises a core barrel that is positioned in the annulus between the reflector and the reactor vessel, and the primary coolant flow path extends in the downflow toward the bottom portion of the reactor vessel through the annulus between the outer face of the neutron reflector and an inner surface of the core barrel.
3. The nuclear reactor system of clause 1, wherein the core support structure further comprises a lower support plate positioned in the bottom portion of the reactor vessel and extending toward an interior surface of the reactor vessel, the one or more support posts extending from the lower support plate towards the core.
4. The nuclear reactor system of clause 3, wherein the one or more support plates are in contacting engagement with a bottom surface of the reflector, and the primary coolant flow path extends from the annulus to the bottom portion of the reactor vessel between the lower support plate and the bottom surface of the reflector.
5. The nuclear reactor system of clause 3, further comprising a lower core plate supported on the one or more support posts between the posts and the one or more fuel assemblies.
6. The nuclear reactor system of clause 1, wherein the one or more support posts extend from a radiussed inner surface of the reactor vessel through the bottom portion of the reactor vessel and towards the core, and the primary coolant flow path extends from the annulus to the bottom portion of the reactor vessel and around the one or more support posts.
7. The nuclear reactor system of clause 6, further comprising a lower core plate supported on the one or more support posts between the posts and the one or more fuel assemblies, and the primary coolant flow path extends from around the posts through one or more apertures in the lower core plate to the core.
8. The nuclear reactor system of clause 1, wherein a portion of the system comprises one of alumina or beryllia.
9. The nuclear reactor system of clause 8, wherein the reflector comprises one of alumina or beryllia.
10. The nuclear reactor system of clause 8, wherein the reflector comprises a thickness of between about 0.5 inches and 5 inches.
11. A method, comprising:
   providing a nuclear reactor system that comprises a reactor vessel that comprises an interior volume, a core that comprises one or more nuclear fuel assemblies, a riser that extends from a top portion of the core through an interior volume of the reactor vessel towards an upper half of the reactor vessel, and a core support structure;
   circulating a flow of primary coolant from the riser upward toward an upper half of the reactor vessel;
   circulating the flow of primary coolant from the upper half of the reactor vessel downward to a bottom portion of the reactor vessel through an annulus between an outer face of a neutron reflector that surrounds the core and the reactor vessel;
   circulating the flow of primary coolant from the bottom portion of the reactor vessel around one or more support posts of the core support structure that support the fuel assemblies and through the core; and
   circulating the flow of primary coolant from the core to the riser in a region between the fuel assemblies and an inner surface of the reflector opposite the outer face.
12. The method of clause 11, wherein the core support structure further comprises a core barrel, and circulating the flow of primary coolant from the upper half of the reactor vessel downward to a bottom portion of the reactor vessel through an annulus between an outer face of a neutron reflector that surrounds the core and the reactor vessel comprises:
   circulating the flow of primary coolant from the upper half of the reactor vessel downward to a bottom portion of the reactor vessel through an annulus between an outer face of a neutron reflector that surrounds the core and the core barrel positioned in the annulus between the reflector and the reactor vessel.
13. The method of clause 11, wherein the core support structure further comprises a lower support plate positioned in the bottom portion of the reactor vessel and extending toward an interior surface of the reactor vessel and the one or more support posts extend from the lower support plate into contacting engagement with a bottom surface of the reflector, and circulating the flow of primary coolant from the bottom portion of the reactor vessel around one or more support posts of the core support structure that support the fuel assemblies and through the core comprises:
   circulating the flow of primary coolant from the annulus to the bottom portion of the reactor vessel between the lower support plate and the bottom surface of the reflector.
14. The method of clause 13, further comprising circulating the flow of primary coolant from between the lower support plate and the bottom surface of the reflector through a lower core plate supported on the one or more support posts between the posts and the one or more fuel assemblies and to the core.
15. The method of clause 11, wherein the one or more support posts extend from a radiussed inner surface of the reactor vessel through the bottom portion of the reactor vessel and towards the core.
16. The method of clause 15, wherein circulating the flow of primary coolant from the bottom portion of the reactor vessel around one or more support posts of the core support structure that support the fuel assemblies and through the core comprises:
   circulating the flow of primary coolant through a lower core plate supported on the one or more support posts between the posts and the one or more fuel assemblies and to the core.
17. The method of clause 11, wherein the reflector comprises one of alumina or beryllia.
18. The method of clause17, wherein the reflector comprises a thickness of between about 0.5 inches and 5 inches.
19. A nuclear reactor module comprising:
   a reactor vessel;
   a core that comprises one or more nuclear fuel assemblies; and
   a neutron reflector that surrounds the core and comprises alumina.
20. A method of cooling a neutron reflector in a nuclear reactor system, comprising:
   flowing a primary coolant from a riser and into an annulus between the riser and a reactor vessel;
   flowing the primary coolant downward through the annulus that extends between a reflector that surrounds a core of the nuclear reactor system and the reactor vessel; and
   transferring heat from the reflector to the downward flow of primary coolant.

## Claims

1. A nuclear reactor module comprising:
a reactor vessel;
a core that comprises one or more nuclear fuel assemblies; and
a neutron reflector that surrounds the core and comprises alumina.

2. A nuclear reactor module according to claim 1 wherein the reflector has a thickness of between 4 inches and 20 inches.

3. A nuclear reactor module according to claim 1 wherein the reflector has a thickness of between about 0.5 inches and 5 inches.

4. A nuclear reactor system including the module of and of claims 1 to 3 wherein the reactor vessel includes an interior volume and the neutron reflector includes an inner face that surrounds lateral sides of the core and an outer face opposite the inner face; and
the nuclear reactor system further comprises:
a riser that extends from a top portion of the core through the interior volume of the reactor vessel towards an upper half of the reactor vessel;
a core support structure that includes one or more support posts that extend from near a bottom portion of the reactor vessel towards the core to support the one or more nuclear fuel assemblies; and
a primary coolant flow path contained within the reactor vessel that extends from the riser toward the upper half of the reactor vessel, from the upper half of the reactor vessel in a downflow toward the bottom portion of the reactor vessel through an annulus between the outer face of the neutron reflector and the reactor vessel, and from the bottom portion of the reactor vessel around the one or more support posts through the core and to the riser.

5. A nuclear reactor system according to claim 4 wherein, the core support structure further includes a core barrel that is positioned in the annulus between the reflector and the reactor vessel.

6. A nuclear reactor system according to claim 5, wherein the primary coolant flow path extends in the downflow toward the bottom portion of the reactor vessel through the annulus between the outer face of the neutron reflector and an inner surface of the core barrel.

7. A nuclear reactor system according to any of claims 4 to 6, wherein the core support structure further includes a lower support plate positioned in the bottom portion of the reactor vessel and extending toward an interior surface of the reactor vessel.

8. A nuclear reactor system according to claim 5, wherein the one or more support posts extend from the lower support plate towards the core.

9. A nuclear reactor system according to any of claims 7 or 8, wherein the one or more support plates are in contacting engagement with a bottom surface of the reflector.

10. A nuclear reactor system according to claim 9, wherein the primary coolant flow path extends from the annulus to the bottom portion of the reactor vessel between the lower support plate and the bottom surface of the reflector.

11. A nuclear reactor system according to any of claims 4 to 10, further comprising a lower core plate supported on the one or more support posts between the posts and the one or more fuel assemblies.

12. A nuclear reactor system according to claim 11, wherein the primary coolant flow path extends from around the posts through one or more apertures in the lower core plate to the core.

13. A nuclear reactor system according to any of claims 4 to 12, wherein the one or more support posts extend from a radiussed inner surface of the reactor vessel through the bottom portion of the reactor vessel and towards the core.

14. A nuclear reactor system according to any of claims 4 to 13, wherein the primary coolant flow path extends from the annulus to the bottom portion of the reactor vessel and around the one or more support posts.

15. A nuclear reactor system according to any of claims 4 to 14, wherein a portion of the system includes beryllia.
